# EUROPEAN PATENT APPLICATION

(11) **EP 4 306 997 A1**
(43) Date of publication of application: **17.01.2024**
(21) Application number: 22774082.6
(22) Date of filing: 15.03.2022
(51) Int. Cl.: G01S 7/487, G01S 7/481

(54) **LASER RADAR, OPTICAL ECHO SIGNAL RECEIVING METHOD AND VEHICLE**

(30) Priority: 22.03.2021 CN 202110303493
(71) Applicant: Huawei Technologies Co., Ltd., Shenzhen, Guangdong 518129 (CN)
(72) Inventor: WANG, Hongliang, Shenzhen, Guangdong 518129 (CN); HAN, Wei, Shenzhen, Guangdong 518129 (CN); AN, Kai, Shenzhen, Guangdong 518129 (CN); WANG, Xiaoheng, Shenzhen, Guangdong 518129 (CN); YU, Anliang, Shenzhen, Guangdong 518129 (CN)
(74) Representative: MERH-IP Matias Erny Reichl Hoffmann Patentanwälte PartG mbB
(86) International application number: PCT/CN2022/080814
(87) International publication number: WO 2022/199421

(57) **Abstract**

This application relates to the field of internet of vehicles, and discloses a lidar, a method for receiving a backward optical signal, and a vehicle, to expand a detectable range of a detector, improve a ranging capability of the lidar in a long-distance target detection area, and reduce occurrence of a problem of a detection blind area of the lidar in a short-distance target detection area, further to reduce an application limitation of the lidar. This may implement a wider application scenario for the lidar for autonomous driving or assisted driving. The lidar includes a non-equal proportion focusing system, and the non-equal proportion focusing system has different focal power in a first direction and a second direction. Further, the method improves an advanced driver assistant system ADAS capability of a terminal in autonomous driving or assisted driving, and may be applied to the internet of vehicles, for example, vehicle-to-everything V2X, long term evolution-vehicle LTE-V, and vehicle-to-vehicle V2V.

## Description

### CROSS-REFERENCE TO RELATED APPLICATIONS

This application claims priority to Chinese Patent Application No. 202110303493.6, filed with the China National Intellectual Property Administration on March 22, 2021 and entitled "LIDAR, AND METHOD FOR RECEIVING BACKWARD OPTICAL SIGNAL", which is incorporated herein by reference in its entirety.

### TECHNICAL FIELD

Embodiments of this application relate to the field of internet of vehicles technologies, and in particular, to a lidar, a method for receiving a backward optical signal, and a vehicle.

### BACKGROUND

A lidar may obtain three-dimensional space information of a target object by using a detection technology. The lidar detects a feature like a distance from the target object by emitting laser beams. A working principle of the lidar is as follows: A light source (for example, a laser) emits a beam (for example, a laser beam) to the target object (for example, a vehicle, a person, or an obstacle), a detector receives a beam reflected by the target object, a timer (for example, a system clock) calculates time of flight between being emitted and being received of the beam, and information about a distance between the light source and the target object may be determined based on the time of flight, a light speed, a moving speed of a light source, a moving speed of the target object, and the like, so that the target object may be detected, tracked, and recognized. However, in different detection scenarios, a detected target object, a detected environment, and the like have various complexities, and consequently a detectable range of the lidar is limited.

For example, if the lidar can receive only a small quantity of backward beams, the three-dimensional space information of the target object may not be accurately obtained because energy of the received backward beams is insufficient (weak), thereby weakening a long-distance ranging capability of the lidar. A reason why the lidar can receive only the small quantity of backward beams is as follows: When the laser beam is propagated in a strong scattering medium, or when the lidar is far away from a target object that needs to be detected, and if the lidar receives a large quantity of backward beams, the lidar may fail to detect the received backward beams because energy of the received backward beams is excessively saturated (strong). Consequently, the lidar has a short-distance detection blind area. A reason why the lidar receives the large quantity of backward beams is that the laser beam is propagated in a strong reflection medium, or the lidar is close to the target object that needs to be detected.

Therefore, how to expand the detectable range of the lidar is worth studying currently.

### SUMMARY

Embodiments of this application provide a lidar, a method for receiving a backward optical signal, and a vehicle, to provide a technical solution that can expand a detectable range of a lidar.

Specific technical solutions provided in embodiments of this application are as follows:

According to a first aspect, an embodiment of this application provides a lidar. The lidar includes a non-equal proportion focusing system; and the non-equal proportion focusing system has different focal power in a first direction and a second direction.

Based on the lidar provided in this embodiment of this application, when a backward optical (beam) signal is received, a focusing capability of the backward optical signal in the first direction is different from that in the second direction. Compared with an equal proportion focusing system used in the conventional technology, the lidar provided in this application may implement a larger receiving aperture, so that more backward optical signals can be collected, to obtain more three-dimensional space information of a target object, to enhance a long-distance ranging capability of the lidar. In addition, according to the lidar provided in this application, after passing through the non-equal proportion focusing system, because the backward optical signal has a specific caustic effect in a focusing process, in a scenario with different focal power in the first direction and in the second direction, compared with the equal proportion focusing system, the backward optical signal received by the lidar provided in this application has different degrees of caustic effect in the first direction and the second direction. Therefore, effect of extending the backward optical signal in a direction in which a caustics degree is greater can be presented, so that energy of a large amount of backward optical signals can be tiled on a receiving plane of a detector (for example, in the conventional technology, only one column on the receiving plane of the detector may be used to receive the backward optical signal, and in this application, a plurality of columns on the receiving plane of the detector may be used to receive the backward optical signal), to avoid the lidar cannot detect due to energy oversaturation of the received backward beam. At the same time, energy of stray light is suppressed, thereby reducing a short-distance detection blind area.

In a possible design, the non-equal proportion focusing system includes a first lens group and an equal proportion focusing system. The first lens group is configured to perform beam reduction on a backward optical signal in the first direction. The equal proportion focusing system is configured to perform focusing on the backward optical signal that passes through the first lens group.

In the foregoing design, a receiving pupil in the first direction is determined by the first lens group, and a receiving pupil in the second direction is determined by the equal proportion focusing system. Therefore, in this design, it can be learned that the non-equal proportion focusing system has dual pupils. The non-equal proportion focusing system has dual pupils, which can be equivalent to that non-equal proportion pupils with different apertures exist in a meridian direction and a sagittal direction. Compared with an equal proportion pupil in the conventional technology, this design may have a larger receiving aperture, so that more backward optical signals can be collected. In addition, after the backward optical signal passes through the first lens group, the backward optical signal has a caustic effect to a certain extent, that is, the backward optical signal has a certain degree of extending. After the backward optical signal continues to enter the equal proportion focusing system, the backward optical signal has a caustic effect to a greater extent in the first direction than in the second direction, so that energy of the backward optical signal can be tiled to a certain extent in a vertical direction of the first direction, and this may reduce a short-distance blind area caused by energy saturation.

In a possible example, the first lens group includes a first positive focus component and a first negative focus component, the first negative focus component is configured to process a backward optical signal that passes through the first positive focus component; and an image-space focus of the first positive focus component coincides with an image-space focus of the first negative focus component.

According to the foregoing example, a combination form of the first positive focus component and the first negative focus component is designed, so that a purpose that the first lens group needs to perform beam reduction on the backward beam in the first direction may be achieved. In addition, the implementation provided in this example features a simple structure and easy implementation.

Specific implementation is as follows: The first positive focus component is a positive cylindrical lens having positive focal power in the first direction, and the first negative focus component is a negative cylindrical lens having negative focal power in the first direction. Since the cylindrical lens has focal power for one of the two directions perpendicular to each other, and the other direction does not have focal power, that is, it is equivalent to a plane glass. Therefore, based on a function that needs to be implemented by the first lens group in this application, a positive cylindrical lens and a negative cylindrical lens may be used to implement beam reduction on the backward optical signal in the first direction. In addition, using the cylindrical lens features a simple structure and low costs.

For example, an exit pupil of the backward optical signal that passes through the first negative focus component is an entrance pupil of the equal proportion focusing system. In this way, a backward beam emitted by using the first negative focus component may enter the equal proportion focusing system for further processing. In addition, the backward beam entering the equal proportion focusing system is after beam reduction is performed by using the first lens group, so that a design idea of non-equal proportion imaging can be implemented, and a detectable range of the detector can be expanded.

In another possible example, the first lens group includes a second positive focus component and a third positive focus component, the third positive focus component is configured to process a backward optical signal that passes through the second positive focus component; and an image-space focus of the second positive focus component coincides with an object-space focus of the third positive focus component.

According to the foregoing example, a combination form of the second positive focus component and the third positive focus component is designed, so that a purpose that the first lens group needs to perform beam reduction on the backward beam in the first direction may alternatively be achieved. In addition, the implementation provided in this example also features a simple structure and easy implementation.

Specific implementation is as follows: The second positive focus component is a positive cylindrical lens having second positive focal power in the first direction, the third positive focus component is a positive cylindrical lens having third positive focal power in the first direction; and the second positive focal power is less than the third positive focal power. Similarly, a requirement of the first lens may also be easily implemented by using two positive cylindrical lenses.

For example, an exit pupil of the backward optical signal that passes through the third positive focus component is an entrance pupil of the equal proportion focusing system. In this way, a backward beam emitted by using the third positive focus component may enter the equal proportion focusing system for further processing. In addition, the backward beam entering the equal proportion focusing system is after beam reduction is performed by using the first lens group, so that a design idea of non-equal proportion imaging can be implemented, and a detectable range of the detector can be expanded.

In a possible example, the first lens group does not perform beam reduction on the backward optical signal in the second direction. Based on this, the first lens group may perform beam reduction on the backward optical signal in the first direction, so that the non-equal proportion focusing system can have different focal power in the first direction and in the second direction.

In another possible design, the non-equal focusing system includes a second lens group and a third lens group. The second lens group is configured to perform focusing on a backward optical signal in the first direction. The third lens group is configured to perform focusing on the backward optical signal in the second direction.

According to the implementations provided above, based on the design idea of the non-equal proportion focusing system, different focal lengths and different focusing capabilities in the first direction and the second direction may be implemented by using different lens combinations, further to expand a detectable range of the detector.

For example, the first lens group and the second lens group may include the following several cases.

Case 1: If the second lens group includes a first lens, and the third lens group does not include the first lens, the first lens has focal power in the first direction, and has no focal power in the second direction.

Case 2: If the third lens group includes a second lens, and the second lens group does not include the second lens, the second lens has focal power in the second direction, and has no focal power in the first direction.

Case 3: If the second lens group includes a third lens, and the third lens group includes the third lens, the third lens has first focal power in the first direction, and has second focal power in the second direction, where the first focal power is different from the second focal power.

In this example, the lens may have a plurality of forms, such as a cylindrical lens featured by processing the backward beam in only one direction, and a hyperbolic lens featured by different focal power in the first direction and the second direction that are perpendicular to each other of the backward beam. Therefore, the second lens group and the third lens group may include a same lens, or may include different lenses. Based on the design idea of this embodiment, the second lens group and the third lens group may have a plurality of composition structural forms, to better adapt to an actual requirement of a service.

Optionally, the third lens is a hyperbolic lens. Based on a feature that the hyperbolic lens has different focal power in the first direction and the second direction, the hyperbolic lens may belong to the second lens group and act on the backward beam in the first direction, or may belong to the third lens group and act on the backward beam in the second direction. Therefore, non-equal proportional imaging is achieved, and a detectable range of the detector is expanded.

It should be noted that the first direction is a meridian direction or a sagittal direction. The first direction is not limited during implementation of this application, and the first direction may be designed based on a target object in a target detection area. For example, if it is known that a height of the target object is greater than its width, the first direction may be a vertical direction (or referred to as the meridian direction). Alternatively, for another example, if it is known that a width of the target object is greater than its height, for example, a car, the first direction may be a horizontal direction (or referred to as the sagittal direction), so that the non-equal proportion focusing system can receive more beams in the sagittal direction, further to obtain more related information about the target object. It should be noted that the second direction is a direction different from the first direction, and may have a specific angle difference from the first direction, for example, perpendicular to each other.

In addition, focal power of any lens included in the second lens group is variable, and focal power of any lens included in the third lens group is variable. During implementation of this application, focal power of any lens assembly included in the first lens group may be adjusted in real time according to an actual scenario requirement, so that a detection requirement can be met, and a detectable range of a detector can be expanded.

In a possible design, the lidar further includes a detector, and when a signal strength of a backward optical signal received by the detector is greater than a first threshold, at least one column of backward optical signals on a receiving plane of the detector are read.

In this design, when the received signal strength of the backward optical signal is high, for example, in a scenario in which detection such as ranging is performed on a short-distance object, the non-equal proportion focusing system provided in this embodiment of this application extends the backward optical signal to a certain extent. In addition, during implementation of this application, a part of the backward optical signal on the receiving plane of the detector may alternatively be read, so that saturation caused by a large quantity of backward optical signals can be effectively reduced, and a short-distance detection blind area can be reduced.

According to a second aspect, an embodiment of this application further provides a method for receiving a backward optical signal. The method includes: performing focusing on the backward optical signal in different focal power in a first direction and a second direction.

In a possible design, perform beam reduction on the backward optical signal in the first direction, and perform focusing on the backward optical signal obtained after the beam reduction.

In a possible design, skip performing beam reduction on the backward optical signal in the second direction.

In a possible design, at a first location, process the backward optical signal in the first direction, and skip processing the backward optical signal in the second direction; and/or, skip processing, at a second location, the backward optical signal in the first direction, and process the backward optical signal in the second direction; and/or perform, at a third location, first focusing on the backward optical signal in the first direction, and perform second focusing on the backward optical signal in the second direction, where focal power of the first focusing is different from focal power of the second focusing.

In a possible design, the first direction is a meridian direction or a sagittal direction.

According to a third aspect, an embodiment of this application provides a method for receiving a backward optical signal, applied to the lidar described in any one of the first aspect and the possible examples included in the first aspect, where the lidar includes a non-equal proportion focusing system. The method includes: controlling focal power adjustment of a first lens, where the first lens is any lens of one or more lenses included in the non-equal proportion focusing system.

According to a fourth aspect, a vehicle is provided, and the vehicle may include the lidar described in any one of the first aspect and the possible examples included in the first aspect.

According to a fifth aspect, a computer-readable storage medium is provided. The computer-readable storage medium is configured to store a computer program or instructions, and when the computer program or instructions are run, the method according to any one of the second aspect or the third aspect is implemented.

According to a sixth aspect, a computer program product including instructions is provided. When the computer program product runs on a computer, the method according to any one of the second aspect or the third aspect is implemented.

For beneficial effects of the second aspect and the sixth aspect, refer to beneficial effects of the possible designs in the first aspect for details. Details are not described herein again.

### BRIEF DESCRIPTION OF DRAWINGS

FIG. 1 is a schematic diagram of a possible application scenario according to this application;
FIG. 2a is an example diagram of a structure of a transceiver coaxial optical system;
FIG. 2b is an example diagram of a structure of a transceiver off-axis optical system;
FIG. 3 is an example diagram of a meridian plane and a sagittal plane according to an embodiment of this application;
FIG. 4a is a schematic diagram of a structure of a non-equal proportion focusing system of a lidar according to an embodiment of this application;
FIG. 4b is a schematic diagram of a structure of an equal proportion focusing system;
FIG. 4c is a schematic diagram of backward beams of a non-equal proportion focusing system of a lidar according to an embodiment of this application;
FIG. 5a is an example diagram of an equivalent pupil of a non-equal proportion focusing system of a lidar according to an embodiment of this application;
FIG. 5b is a schematic diagram of a receiving plane of a detector according to an embodiment of this application;
FIG. 6 is a schematic diagram of backward beams in a non-equal proportion focusing system of a lidar according to an embodiment of this application;
FIG. 7a is a schematic diagram of a structure of a non-equal proportion focusing system of another lidar according to an embodiment of this application;
FIG. 7b is a schematic diagram of a structure of a non-equal proportion focusing system of another lidar according to an embodiment of this application;
FIG. 8 is a schematic flowchart of a backward optical signal receiving method according to an embodiment of this application; and
FIG. 9 is a schematic flowchart of a backward optical signal receiving method according to an embodiment of this application.

### DESCRIPTION OF EMBODIMENTS

The following describes in detail embodiments of this application with reference to accompanying drawings.

A lidar usually works by emitting a detection signal (or referred to as an optical signal) of a high-frequency electromagnetic wave to a target object, and receiving electromagnetic energy of a backward optical signal scattered by the target object. By performing comparison and analysis on the received backward optical signal and the detection signal, information related to the target object, for example, location information of the target object, may be extracted. The detection signal may be, for example, a laser beam, and the backward optical signal may also be referred to as a backward beam.

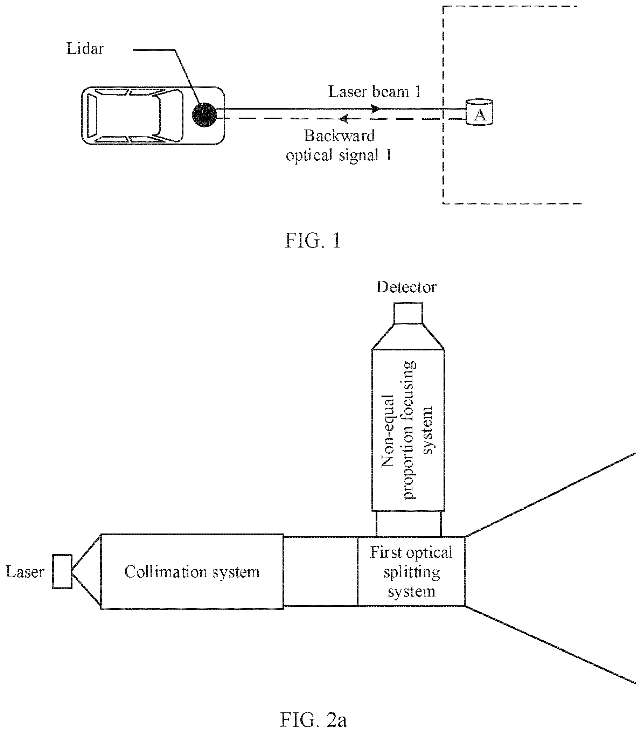

FIG. 1 is a schematic diagram of a possible application scenario according to this application. In this application, a lidar may be applied to fields of an advanced driver assistant system (advanced driver assistant system, ADAS) (for example, autonomous driving), a robot, an uncrewed aerial vehicle, internet of vehicles, security surveillance, and the like. In this scenario, the lidar may be installed on a mobile device. For example, the lidar may be installed on a motor vehicle (for example, an unmanned vehicle, an intelligent vehicle, an electric vehicle, or a digital vehicle) and used as a vehicle-mounted radar. For another example, the lidar may be installed on an uncrewed aerial vehicle and used as an airborne radar, and the like. As shown in FIG. 1, the lidar may include a laser and a detector (not shown in the figure). The laser emits a laser beam in a specific direction. If there is a target object within a specific distance in a direction of emitting the laser beam, the laser beam may be reflected by a surface of the target object. In FIG. 1, an example in which there is a target object A in a direction of emitting a laser beam 1 is used. After the laser beam 1 emitted by the laser reaches the target object A, the laser beam 1 is reflected by a surface of the target object A, and a reflected signal returns to the detector of the lidar as a backward optical signal. The detector may determine association information, for example, location information of the target object A, of the target object A based on the received backward optical signal and an emitted detection signal.

Specifically, the lidar may be installed on a body of the motor vehicle, to obtain measurement information such as latitude and longitude, a speed, an orientation of the vehicle, and a distance from the vehicle to a surrounding object that are sensed by a sensor in real time or periodically, and then implement assisted driving or unmanned driving of the vehicle based on the measurement information. For example, a position of the vehicle is determined through the longitude and the latitude. Alternatively, a traveling direction and a destination of the vehicle in a future period of time are determined through the speed and the orientation. Alternatively, a quantity of obstacles, density of the obstacles, and the like are determined through the distance to the surrounding object, where the obstacles are around the vehicle.

A common lidar includes a scanning lidar and a non-scanning lidar. The scanning lidar is, for example, a frequency-modulated continuous waveform (frequency-modulated continuous waveform, FMCW) lidar based on a micro-electro-mechanical system (micro-electro-mechanical system, MEMS), and an FMCW lidar based on an optical phased array (optical phased array, OPA) technology. The non-scanning lidar is, for example, a Flash lidar based on pulsed time-of-flight (time-of-flight, TOF). The Flash lidar may directly emit, in a short time, a plurality of laser beams that cover a detection area, and then use a highly-sensitive receiver to complete drawing of an image of an environment target object.

In addition, the lidar may alternatively be installed on a mobile platform, like a satellite. In this case, the lidar needs assistance of another apparatus in the mobile platform to determine a current position and steering information of the lidar, to ensure availability of measured data. For example, the mobile platform may further include a global positioning system (global positioning system, GPS) apparatus and an inertial measurement unit (inertial measurement unit, IMU) apparatus. A lidar may obtain a feature like a position and a speed of a target object based on measurement data of the GPS apparatus and the IMU apparatus. For example, the lidar may provide geographic position information of the mobile platform by using the GPS apparatus on the mobile platform, and record a posture and steering information of the mobile platform by using the IMU apparatus. After determining a distance to the target object based on a backward optical signal, the lidar may convert a measurement point of the target object from a relative coordinate system to a position point in an absolute coordinate system based on at least one of the geographic position information provided by the GPS apparatus or the posture and the steering information provided by the IMU apparatus, to obtain geographical position information of the target object. Therefore, the lidar can be applied to the mobile platform. It may be understood that the lidar in this application may further be applied to a scenario like autonomous driving or internet of vehicles.

Currently, when detecting three-dimensional space information of the target object, the lidar obtains the three-dimensional space information by directly performing calculation on the backward optical signal. However, in different detection scenarios, a detected target object, a detected environment, and the like have various complexities, and consequently a detectable range of the lidar is limited. For example, if the lidar can receive only a small quantity of backward beams, the three-dimensional space information of the target object may not be accurately obtained because energy of the received backward beams is insufficient (weak), thereby weakening a long-distance ranging capability of the lidar. A reason why the lidar can receive only the small quantity of backward beams is as follows: When the laser beam is propagated in a strong scattering medium, or when the lidar is far away from a target object that needs to be detected, if the lidar receives a large quantity of backward beams, the lidar may fail to detect the received backward beams because energy of the received backward beams is excessively saturated (strong). Consequently, a short-distance detection blind area exists in the lidar. A reason why the lidar receives the large quantity of backward beams is that the laser beam is propagated in a strong reflection medium, or the lidar is close to a target object that needs to be detected.

In view of this, an embodiment of this application provides a lidar, and the lidar includes a non-equal proportion focusing system. The non-equal proportion focusing system may perform focusing in different focal power on the backward beam in two different directions, to expand a detectable range of the detector. Specifically, in this embodiment of this application, a long-distance ranging capability of the lidar can be enhanced, and a short-distance detection blind area of the lidar can be reduced. The two different directions may be, for example, a meridian direction and a sagittal direction, or may be any two directions with a specific angle difference. This is not limited in this application.

An optical system used by the lidar provided in this application may use a transceiver coaxial structure, or may use a transceiver off-axis structure. The optical system may also be referred to as an optical module, a transceiver module, or the like.

In the transceiver coaxial structure, an optical signal sent by the optical system and a received optical signal pass through a same path, that is, the sent optical signal and the received optical signal (also referred to as the backward optical signal in this embodiment of this application) have a same optical axis. An optical system may include a laser, a collimation system, a first optical splitting system, and a receiving system. The laser, the collimation system, and the first optical splitting system may belong to a transmitting system. The receiving system may use the non-equal proportion focusing system provided in this embodiment of this application. The receiving system may further include a detector. For example, refer to FIG. 2a. FIG. 2a is a schematic diagram of a structure of an optical system of transceiver coaxial. In FIG. 2a, a laser beam emitted by a laser is collimated by a collimation system, to standardize a propagation direction of the laser beam, so that the laser beam propagates forward as much as possible. The laser beam passes through a first optical splitting system, and then is emitted into a target detection area through the first optical splitting system. A received backward beam reaches the first optical splitting system, and the first optical splitting system sends the received backward beam to a non-equal proportion focusing system. Finally, a backward optical signal processed by the non-equal proportion focusing system is received by a detector.

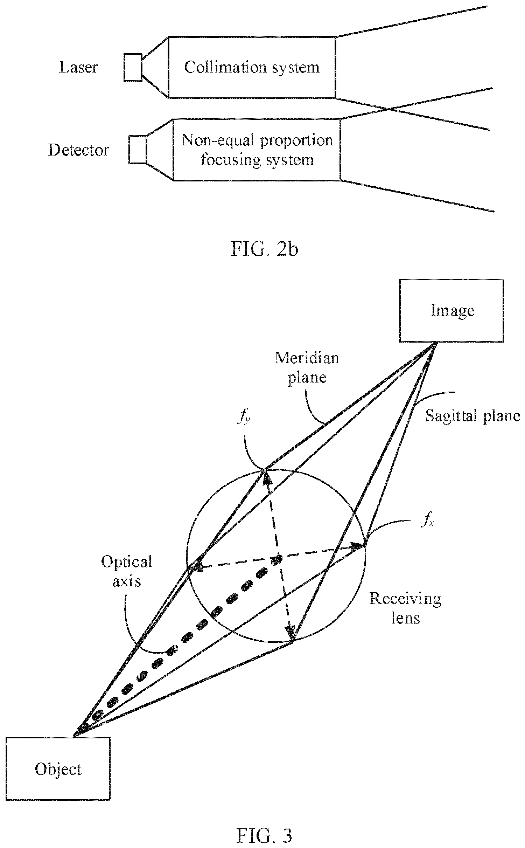

In a transceiver off-axis structure, an optical signal sent by the optical system and a received optical signal pass through different paths, that is, the sent optical signal and the received optical signal have different optical axes. An optical system may include a laser, a collimation system, and a receiving system. The laser and the collimation system may belong to a transmitting system. The receiving system may use the non-equal proportion focusing system provided in this embodiment of this application. The receiving system may further include a detector. For example, refer to FIG. 2b. FIG. 2b is a schematic diagram of a structure of an optical system of transceiver off-axis. In FIG. 2b, a laser beam emitted by a laser is collimated by a collimation system, to standardize a propagation direction of the laser beam, so that the laser beam propagates forward as much as possible, and the collimation system may emit the laser beam into a target detection area. A received backward beam reaches a non-equal proportion focusing system. Finally, a backward optical signal processed by the non-equal proportion focusing system is received by a detector. It can be learned that, for a transceiver off-axis structure, because a laser beam emitted by the optical system and the received backward beam pass through different paths, a first optical splitting system does not need to be disposed.

The following first describes some terms that may be used in subsequent embodiments of this application, to facilitate understanding by a person skilled in the art.
(1) A meridian plane and a meridian direction: The meridian plane represents a plane determined by a main ray of an object point outside an axis and a main axis of an optical system (which may be referred to as an optical axis for short), and is referred to as a meridian plane of optical system imaging. Based on this, the meridian direction represents a direction of beams observed on the meridian plane. For example, FIG. 3 is an example diagram of a meridian plane and a sagittal plane according to an embodiment of this application. A plane determined by f_{y} and an optical axis is the meridian plane.
(2) The sagittal plane and a sagittal direction: The sagittal plane represents a plane that passes through the optical axis and is perpendicular to the meridian plane each other, which is referred to as a sagittal plane of the optical system imaging. Based on this, the sagittal direction represents a direction of beams observed on the sagittal plane. With reference to FIG. 3, a plane determined by fₓ and the optical axis is the sagittal plane and is perpendicular to the meridian plane each other.
   During implementation of this application, the meridian plane and the sagittal plane are used as examples, and may be used to observe a transmission status of a backward beam.
(3) A pupil represents an entrance of light, and an aperture size of the pupil represents an ability of the optical system to receive light. The pupil includes an incident pupil and an exit pupil. The incident pupil is an image formed by an aperture stop in object space through a front optical system, which can be referred to as an entrance pupil for short. An image formed by a rear optical system in image space is referred to as the exit pupil, which can be referred to as the exit pupil for short. The aperture stop may or may not coincide with the incident pupil or the exit pupil.

In embodiments of this application, unless otherwise specified, a quantity of nouns represents "a singular noun or a plural noun", namely, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. Unless otherwise specified, the character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one (piece) of a, b, or c may represent: a, b, c, a-b, a-c, b-c, or a-b-c, where a, b, and c may be singular or plural.

Ordinal numerals such as "first" and "second" in embodiments of this application are used to distinguish between a plurality of objects, and are not intended to limit a size, content, a sequence, a time sequence, an application scenario, priorities, or importance of the plurality of objects. For example, a first optical splitting system and a second optical splitting system may be a same optical splitting system, or may be different optical splitting systems. In addition, the name does not mean that the two optical splitting systems are different in structures, locations, priorities, application scenarios, importance, or the like.

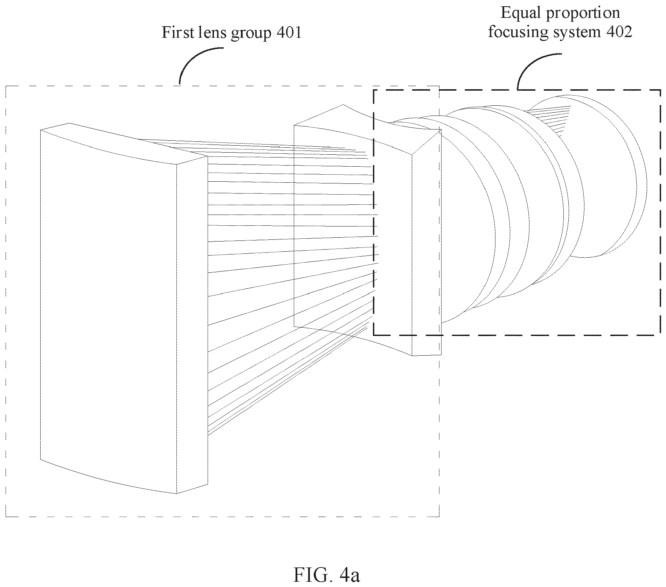

The foregoing describes some concepts in embodiments of this application, and the following describes in detail the lidar provided in embodiments of this application. The lidar provided in embodiments of this application includes a non-equal proportion focusing system. Based on a design idea of non-equal proportion imaging, the non-equal proportion focusing system may have a plurality of implementations. The following describes the embodiments with reference to FIG. 4a to FIG. 9.

FIG. 4a is a schematic diagram of a structure of a non-equal proportion focusing system of a lidar according to an embodiment of this application. The non-equal proportion focusing system includes a first lens group 401 and an equal proportion focusing system 402. The first lens group 401 is configured to perform beam reduction on a backward optical signal in a first direction. Then, the equal proportion focusing system 402 performs focusing on the backward optical signal that passes through the first lens group 401. In this way, compared with a processing manner in which a backward optical signal is received directly by using the equal proportion focusing system 402 in the conventional technology, because the beam reduction is first performed on the backward optical signal in the first direction by using the first lens group 401, more backward optical signals enter the equal proportion focusing system 402.

As shown in FIG. 4a, the first lens group 401 is located at a front end and belongs to a front optical system, and the equal proportion focusing system 402 is located at a rear end and belongs to a rear optical system. After a backward beam passes through the first lens group 401 at the front end, beam reduction may be performed in the first direction to a certain extent. A degree of beam reduction is determined based on focal power of the first lens group 401 in the first direction. Larger focal power of the first lens group 401 indicates a larger degree of beam reduction. On the contrary, smaller focal power of the first lens group 401 indicates a smaller degree of beam reduction.

It should be noted that the first direction is not limited during implementation of this application, and the first direction of the non-equal proportion focusing system may be designed based on a target object in a target detection area. For example, if it is known that a height of the target object is greater than its width, the first direction may be a vertical direction (or referred to as a meridian direction). Alternatively, for another example, if it is known that a width of the target object is greater than its height, for example, a car, the first direction may be a horizontal direction (or referred to as a sagittal direction), so that the non-equal proportion focusing system can receive more backward beams in the sagittal direction, further to obtain more related information about the target object.

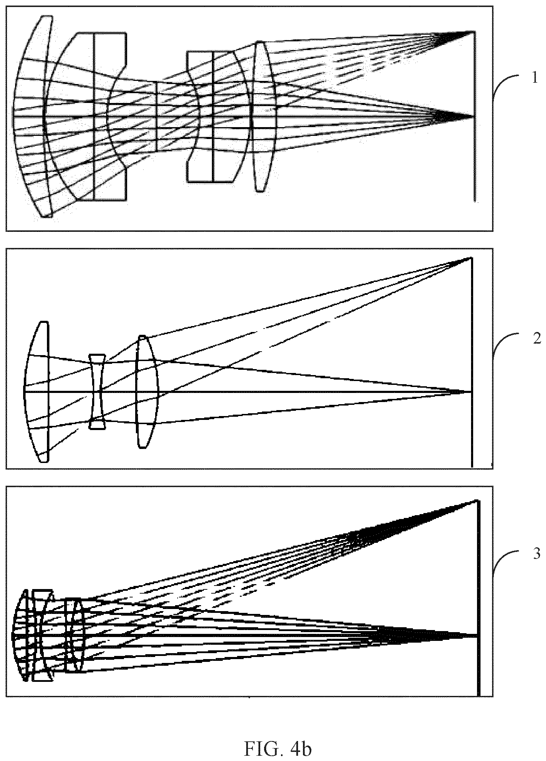

In the foregoing system, as shown in FIG. 4b, the equal proportion focusing system 402 may be composed by common structures currently, such as a double-Gauss structure and its variants (the structure shown in 1 in FIG. 4b), a cooke structure (a full name is a cooke-triplet structure) and its variants (the structure shown in 2 in FIG. 4b), and a tessar structure and its variants (the structure shown in 3 in FIG. 4b). Principles of common structural composition of the equal proportion focusing system 402 may be described with reference to descriptions in the conventional technology. Details are not described in this application again. The equal proportion focusing system 402 is commonly used as a camera module, for example, a camera module of a camera and a camera module of a mobile device (like a mobile phone). Generally, after the equal proportion focusing system 402 implements equal proportional imaging, that is, after the received backward optical signal passes through the equal proportion focusing system 402, focal lengths on the meridian plane and the sagittal plane are the same.

During implementation of this application, a structure of the first lens group 401 may have a plurality of structural forms, and all structures that can implement beam reduction on the backward optical signal may be applicable to this application. This is not limited.

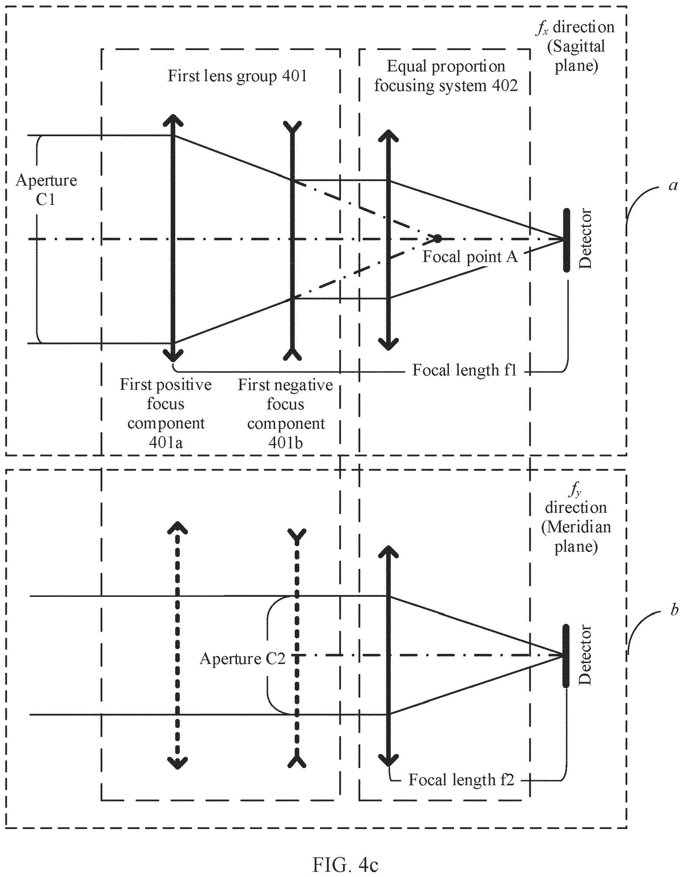

In a possible example, for example, as shown in FIG. 4c, a first lens group 401 may include a first positive focus component 401a and a first negative focus component 401b. The first negative focus component 401b is configured to process a backward optical signal that passes through the first positive focus component 401a. An image-space focus of the first positive focus component 401a coincides with an image-space focus of the first negative focus component 401b, and an overlapped focal point is, for example, a focal point A in FIG. 4c. In this composition structure, for example, the backward optical signal is a parallel beam. After the backward optical signal passes through the first positive focus component 401a, beams are converged. In a convergence process, after passing through the first negative focus component 401b that has the same image-space focus as the first positive focus component 401a, the parallel beam may be restored. Therefore, it can be learned that, after processing by the first lens group 401, a backward optical signal that previously occupies an aperture C1 in FIG. 4c occupies an aperture C2 in FIG. 4c, which is equivalent to that beam reduction is performed on the backward optical signal.

Optionally, the first positive focus component 401a may be a positive cylindrical lens having positive focal power in the first direction, and the first negative focus component 401b may be a negative cylindrical lens having negative focal power in the first direction. In addition, an exit pupil of the backward optical signal passing through the first negative focus component 401b is an entrance pupil of the equal proportion focusing system 402. In this way, a beam emitted through the first negative focus component 401b may enter the equal proportion focusing system 402 for further processing.

It should be noted that the first positive focus component 401a may include only a positive lens, or may include a positive lens and a negative lens, but focal power obtained after the positive lens and the negative lens are combined is positive. The first negative focus component 401b may include only a negative lens, or may include a positive lens and a negative lens, but focal power obtained after the positive lens and the negative lens are combined is negative.

With reference to FIG. 4c, an example in which the first direction is a sagittal direction and a second direction is a meridian direction is used. Herein, a in FIG. 4c shows an example diagram of a beam observed from an fₓ direction (a sagittal plane), and b in FIG. 4c shows an example diagram of a beam observed from an f_{y} direction (a meridian plane), where the first direction is the fₓ direction, that is, the sagittal direction.

On the sagittal plane, after passing through the first positive focus component 401a, the backward beams are converged to a certain extent, then pass through the first negative focus component 401b, and this implements beam reduction on the backward beam received by the first lens group 401. Then, the backward beam after the beam reduction enters the equal proportion focusing system 402 for focusing, and is finally received by a detector.

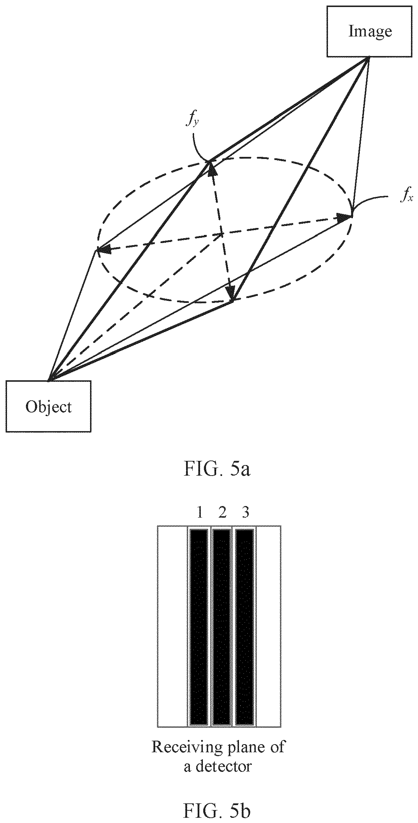

On the meridian plane, since a cylindrical lens does not have focal power to the backward beam in the meridian direction, a lens included in the first lens group 401 is equivalent to a plane glass with respect to the backward beam, and the backward beam propagates as an original path in the meridian direction. The backward beam then enters the equal proportion focusing system 402 for focusing and is finally received by the detector. With reference to FIG. 4c, it may be obtained that a focal length of the backward beam on the sagittal plane is f1, and a focal length of the backward beam on the meridian plane is f2. Therefore, focal lengths of the backward beam on the sagittal plane and the meridian plane are not equal. In addition, the non-equal proportion focusing system provided in this application features dual pupils. Specifically, a receiving pupil in the sagittal direction is located on the first lens group 401. It is assumed that an aperture size is expressed as C1, a receiving pupil in the meridian direction is located on the equal proportional focusing system 402, and an aperture size is expressed as C2,
in this way, the dual pupils in this application may be equivalent to non-equal proportion pupils with different apertures in the meridian direction and the sagittal direction. Compared with an equal proportion pupil in the conventional technology, in this application, a larger receiving aperture may be obtained by using dual pupils, so that more backward optical signals can be collected, and a ranging capability can be enhanced. For example, FIG. 5a is an example diagram of an equivalent pupil of a non-equal proportion focusing system of a lidar according to an embodiment of this application. Compared with the equal receiving pupil shown in FIG. 3 in the conventional technology, the equivalent pupil has a larger aperture.

In addition, after the backward optical signal passes through the lens group, the backward optical signal has a caustic effect, that is, the backward optical signal is extended to a certain extent. Therefore, energy of the backward optical signal may be tiled to a certain extent in a vertical direction of the first direction. For example, in the conventional technology, the backward optical signal may be received only by using one column on a receiving plane of a detector. In this application, the backward optical signal may be received by using a plurality of columns on the receiving plane of the detector, to avoid a lidar failure to detect due to oversaturated energy of the received backward beam. In addition, when a signal strength of the backward optical signal received by the detector is greater than a first threshold, at least one column of backward optical signals on the receiving plane of the detector may be further read, to reduce a short-distance blind area caused by energy saturation. For example, FIG. 5b is a schematic diagram of a receiving plane of a detector according to an embodiment of this application. Energy of a strong backward optical signal may be tiled on columns 1, 2, and 3 of the receiving plane of the detector. When the backward optical signal is read from the receiving plane of the detector, backward optical signals in a second column located in the middle of the receiving plane of the detector can be read, so that energy saturation caused by strong backward optical signals can be effectively reduced, and a detection blind area can be reduced. In addition, the non-equal proportion focusing system provided in this embodiment of this application further features a simple structure.

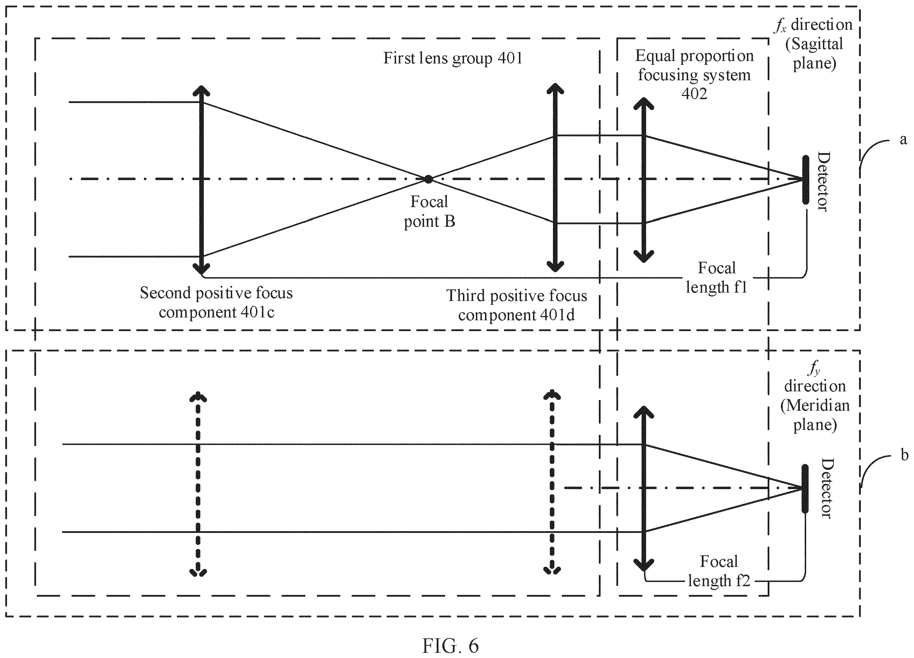

In another possible example, for example, as shown in FIG. 6, a composition structure of the first lens group 401 may further include a second positive focus component 401c and a third positive focus component 401d. The third positive focus component 401d is configured to process a backward optical signal that passes through the second positive focus component 401c. An image-space focus of the second positive focus component 401c coincides with an object-space focus of the third positive focus component 401d, and an overlapped focal point is, for example, a focal point B in FIG. 6. In this composition structure, for example, the backward optical signal is a parallel beam. After the backward optical signal passes through the second positive focus component 401c, beams are converged. After being converged to the focal point, the beam continues to propagate, and then may be restored to a parallel beam by passing through the third positive focus component 401d that has a same object-space focus as the second positive focus component 401c.

Optionally, the second positive focus component 401c is a positive cylindrical lens having second positive focal power in the first direction, and the third positive focus component 401d is a positive cylindrical lens having third positive focal power in the first direction, where the second positive focal power is less than the third positive focal power. In addition, an exit pupil of the backward optical signal passing through the third positive focus component 401d is an entrance pupil of the equal proportion focusing system 402. In this way, a beam emitted through the third positive focus component 401d may enter the equal proportion focusing system 402 for further processing.

It should be noted that the second positive focus component 401c may include only a positive lens, or may include a positive lens and a negative lens, but focal power obtained after the positive lens and the negative lens are combined is positive. Similarly, the third positive focus component 401d may include only a positive lens, or may include a positive lens and a negative lens, but focal power obtained after the positive lens and the negative lens are combined is positive.

With reference to FIG. 6, for a specific implementation, refer to the content of the embodiment described with reference to FIG. 4c. Details are not described herein again. A difference from FIG. 4c lies in that in this example, the first lens group 401 includes all positive focus components, and the second positive focus component 401c with smaller focal power is at the front end of the third positive focus component 401d with larger focal power. The beam reduction on the backward beam can also be implemented.

During implementation of this application, focal power of any lens assembly included in the first lens group 401 may be further adjusted in real time according to an actual scenario requirement. The first lens group 401 is designed to be zoomed, that is, focal power of any lens assembly is variable. Therefore, detection requirements in a plurality of scenarios can be met, and a detectable range of the detector can be expanded.

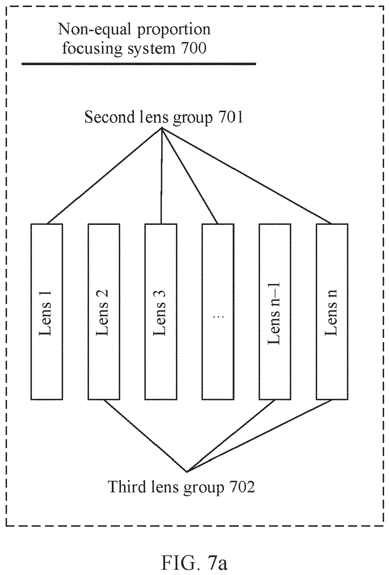

FIG. 7a is a schematic diagram of a structure of a non-equal proportion focusing system of another lidar according to an embodiment of this application. A non-equal proportion focusing system 700 may include a second lens group 701 and a third lens group 702. The second lens group 701 is configured to perform, in a first direction, focusing in second focal power on a backward optical signal entering the non-equal proportion focusing system 700. The third lens group 702 is configured to perform, in a second direction, focusing in third focal power on the backward optical signal entering the non-equal proportion focusing system 700. The second focal power is different from the third focal power. Through processing by the second lens group 701 and the third lens group 702, the non-equal proportion focusing system 700 may enable a detector to obtain related information about a target object in a target detection area. The first direction and the second direction are different directions with a specific angle difference. For example, the first direction and the second direction may be perpendicular to each other.

It should be noted that a quantity, shapes, and focal power of lenses separately included in the second lens group 701 and the third lens group 702 are not limited in this application. The second lens group 701 may include one or more lenses. After a plurality of lenses are combined, focusing in the second focal power in the first direction may be performed. Similarly, the third lens group 702 may include one or more lenses. After a plurality of lenses are combined, focusing in the third focal power in the second direction may be performed. For example, as shown in FIG. 7a, the second lens group 701 and the third lens group 702 may include lenses 1 to n, and a quantity of n is not limited. The lens 1, the lens 3, ..., and the lens n belong to the second lens group 701. The lens 2 ... lens n-1 and lens n belong to the third lens group 702.

As an example, the lens may have a plurality of forms, such as a cylindrical lens featured by processing the backward beam in only one direction, and a hyperbolic lens featured by different focal power in the first direction and the second direction that are perpendicular to each other of the backward beam. Therefore, the second lens group 701 and the third lens group 702 may include a same lens, or may include different lenses. Specifically, the following scenarios may be included.

Scenario 1: If the second lens group 701 includes a first lens, and the third lens group 702 does not include the first lens, the first lens has focal power in the first direction, and has no focal power in the second direction. For example, the first lens may be a cylindrical lens. If the first direction is a sagittal direction, the first lens is designed to be vertically placed, to implement a convergence function in the sagittal direction and a function of plane glass in a meridian direction.

Scenario 2: If the third lens group 702 includes a second lens, and the second lens group 701 does not include the second lens, the second lens has focal power in the second direction, and has no focal power in the first direction. For example, the first lens may be a cylindrical lens. If the second direction is a meridian direction, the second lens is designed to be horizontally placed, that is, the second lens is placed perpendicular to the first lens each other, to implement a convergence function in the meridian direction, and a function of plane glass in a sagittal direction.

Scenario 3: If the second lens group 701 includes a third lens, and the third lens group 702 includes the third lens, the third lens has focal power in the first direction, and also has focal power in the second direction. For example, the third lens may be a hyperbolic lens.

During implementation of this embodiment, focal power of any lens assembly included in the second lens group 701 and the third lens group 702 may be further adjusted in real time according to an actual scenario requirement. The first lens group is designed to be zoomed, that is, focal power of any lens assembly is variable. Therefore, detection requirements can be met, and a detectable range of a detector can be expanded. It should be noted that, currently, a component that can implement a same function as a lens is also applicable to this application. This is not limited.

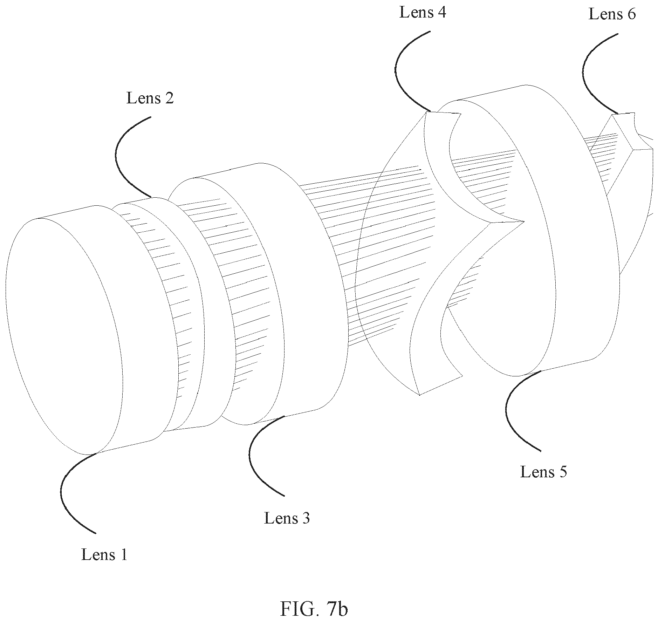

For ease of understanding, FIG. 7b is a schematic diagram of a structure of a non-equal proportion focusing system of another lidar according to an embodiment of this application. For example, the non-equal proportion focusing system shown in FIG. 7b may include a lens 1, a lens 2, a lens 3, a lens 4, a lens 5, and a lens 6. The lens 1, the lens 3, and the lens 5 may be planoconvex lenses, and are configured to implement light convergence. The lens 2 is a planoconcave lens, and may work with the lens 1 to restore light to a parallel beam. The lens 4 and the lens 6 are curved lenses that have focal power in a first direction, and are configured to implement that focal power in the first direction is different from focal power in a second direction. Through joint action of a plurality of lenses, the non-equal proportion focusing system provided in this application can implement a non-equal proportion imaging design, so that a detectable range of a detector can be expanded. It should be noted that the non-equal proportion focusing system shown in FIG. 7b is merely a possible example, and is not intended as a limitation on this application.

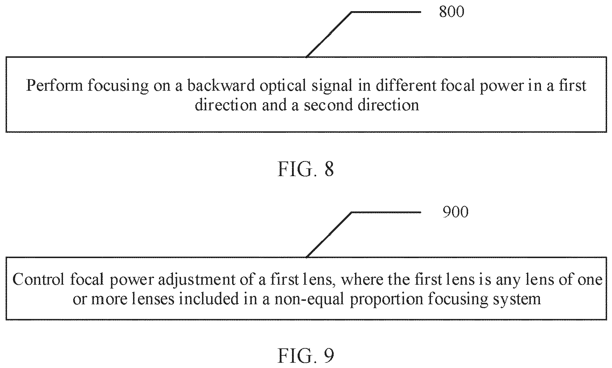

FIG. 8 is a schematic flowchart of a backward optical signal receiving method according to an embodiment of this application. The method includes the following step.

Step 800: Perform focusing on a backward optical signal in different focal power in a first direction and a second direction.

A possible example is performing beam reduction on the backward optical signal in the first direction, and performing focusing on the backward optical signal obtained after the beam reduction. In addition, skip performing beam reduction on the backward optical signal in the second direction. The focusing may be implemented by using an equal proportion focusing system. In this way, before equal proportion focusing is performed on a backward beam, the beam reduction may be performed on the backward beam in the first direction to a certain extent, so that a quantity of beams in the first direction on which the equal proportion focusing is performed is greater than a quantity of beams in the second direction. A backward optical signal received by a detector thus has more energy. In addition, after beam reduction is performed on a beam in the first direction, the backward optical signal has a caustic effect in the first direction, and after focusing is performed, effect that the backward optical signal received by the detector is extended and tiled on a receiving plane can be achieved. In this way, saturation caused by a strong backward optical signal can be reduced.

In another possible example, focusing in different focal power is performed in the first direction and the second direction, which may be implemented by performing different processing in the first direction and the second direction at different locations. For example, performing different processing in the first direction and the second direction may include the following several possible cases or combinations.

Case 1: At a first location, process the backward optical signal in the first direction, and skip processing the backward optical signal in the second direction. During implementation, a cylindrical lens may be placed at the first location to implement processing in this case. A placement direction of the cylindrical lens may be determined based on the first direction, and the cylindrical lens is used to implement focusing on the backward optical signal in the first direction, or is implemented by using a component that can implement a same function as the cylindrical lens.

Case 2: Skip processing, at a second location, the backward optical signal in the first direction, and process the backward optical signal in the second direction. During implementation, a cylindrical lens may alternatively be placed at the second location to implement processing in this case. However, placing the cylindrical lens in this case is different from that in the case 1. The placement of the cylindrical lens in this case is determined based on the second direction, and the cylindrical lens is used to implement focusing on the backward optical signal in the second direction, or is implemented by using a component that can implement a same function as the cylindrical lens.

Case 3: Perform, at a third location, first focusing on the backward optical signal in the first direction, and perform second focusing on the backward optical signal in the second direction, where focal power of the first focusing is different from focal power of the second focusing. During implementation, a hyperbolic lens may be placed at the third location to implement processing in this case. Based on a feature that the hyperbolic lens has different focal power in two directions, first focusing may be performed in the first direction, and second focusing may be performed in the second direction.

FIG. 9 is a schematic flowchart of a backward optical signal receiving method according to an embodiment of this application. The method may be used to control a non-equal proportion focusing system of any lidar provided in the foregoing embodiments, or a lidar or a device including a non-equal proportion focusing system of the lidar. The method specifically includes the following step.

Step 900: Control focal power adjustment of a first lens in the non-equal proportion focusing system, where the first lens is any one of one or more lenses included in the non-equal proportion focusing system. For example, a shape of a target object detected by the non-equal proportion focusing system before previous detection is an object whose height is greater than its width, for example, a building. In this scenario, to improve a range that can be detected by a detector, in the non-equal proportion focusing system, focal power in a meridian direction is smaller than focal power in a sagittal direction. However, when the non-equal proportion focusing system detects an object whose width is greater than its height, like a vehicle, in such a scenario, the non-equal proportion focusing system may design that the focal power in the meridian direction is greater than the focal power in the sagittal direction. Therefore, a lens in the non-equal proportion focusing system that is close to a target object in a target detection area can be designed. It should be noted that, when focal power adjustment of the lens is controlled, the focal power adjustment may be performed on one lens or a plurality of lenses in the non-equal proportion focusing system. The focal power adjustment may alternatively be performed on the non-equal proportion focusing system by adjusting a focal power of a combination of the plurality of lenses as an expected focal power.

An embodiment of this application further provides a lidar, configured to provide a detection function for a vehicle. The lidar includes the non-equal proportion focusing system mentioned in the foregoing embodiment of this application, and is configured to: receive a backward optical signal that is reflected by the laser beam from the target detection area, and process the backward optical signal. The lidar further includes a laser for emitting a laser beam to the target detection area; and the lidar is configured to receive the backward optical signal processed by the non-equal proportion focusing system, and determine a detector of related information of the target detection area based on the processed backward optical signal.

An embodiment of this application further provides a vehicle. The vehicle includes the non-equal proportion focusing system mentioned in the foregoing embodiments of this application, or includes the lidar mentioned in the foregoing embodiments of this application.

When several embodiments provided in this application are implemented in a form of software functional units and sold or used as independent products, the embodiments may be stored in a computer-readable storage medium. The computer software product is stored in a storage medium, and includes several instructions for instructing a computer device (which may be a personal computer, a server, a network device, or the like) to perform all or some of the steps of the method described in the embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), or any other medium that can be used to carry or store expected program code in a form of instructions or a data structure and can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A lidar, wherein the lidar comprises a non-equal proportion focusing system; and
the non-equal proportion focusing system has different focal power in a first direction and a second direction.

2. The lidar according to claim 1, wherein the non-equal proportion focusing system comprises a first lens group and an equal proportion focusing system, wherein
the first lens group is configured to perform beam reduction on a backward optical signal in the first direction; and
the equal proportion focusing system is configured to perform focusing on the backward optical signal that passes through the first lens group.

3. The lidar according to claim 2, wherein the first lens group comprises a first positive focus component and a first negative focus component, the first negative focus component is configured to process a backward optical signal that passes through the first positive focus component; and
an image-space focus of the first positive focus component coincides with an image-space focus of the first negative focus component.

4. The lidar according to claim 3, wherein the first positive focus component is a positive cylindrical lens having first positive focal power in the first direction, and the first negative focus component is a negative cylindrical lens having negative focal power in the first direction.

5. The lidar according to claim 3 or 4, wherein an exit pupil of the backward optical signal that passes through the first negative focus component is an entrance pupil of the equal proportion focusing system.

6. The lidar according to claim 2, wherein the first lens group comprises a second positive focus component and a third positive focus component, the third positive focus component is configured to process a backward optical signal that passes through the second positive focus component; and
an image-space focus of the second positive focus component coincides with an object-space focus of the third positive focus component.

7. The lidar according to claim 6, wherein the second positive focus component is a positive cylindrical lens having second positive focal power in the first direction, the third positive focus component is a positive cylindrical lens having third positive focal power in the first direction; and
the second positive focal power is less than the third positive focal power.

8. The lidar according to claim 6 or 7, wherein an exit pupil of the backward optical signal that passes through the third positive focus component is an entrance pupil of the equal proportion focusing system.

9. The lidar according to claim 2, wherein the first lens group does not perform beam reduction on the backward optical signal in the second direction.

10. The lidar according to claim 1, wherein the non-equal proportion focusing system comprises a second lens group and a third lens group, wherein
the second lens group is configured to perform focusing on a backward optical signal in the first direction; and
the third lens group is configured to perform focusing on the backward optical signal in the second direction.

11. The lidar according to claim 10, wherein if the second lens group comprises a first lens, and the third lens group does not comprise the first lens, the first lens has focal power in the first direction, and has no focal power in the second direction;
if the third lens group comprises a second lens, and the second lens group does not comprise the second lens, the second lens has focal power in the second direction, and has no focal power in the first direction; and
if the second lens group comprises a third lens, and the third lens group comprises the third lens, the third lens has first focal power in the first direction, and has second focal power in the second direction, wherein the first focal power is different from the second focal power.

12. The lidar according to claim 11, wherein the third lens is a hyperbolic lens.

13. The lidar according to any one of claims 1 to 12, wherein the first direction is a meridian direction or a sagittal direction.

14. The lidar according to any one of claims 1 to 13, wherein focal power of any lens comprised in the non-equal proportion focusing system is variable.

15. The lidar according to any one of claims 1 to 14, wherein the lidar further comprises a detector, and when a signal strength of a backward optical signal received by the detector is greater than a first threshold, at least one column of backward optical signals on a receiving plane of the detector are read.

16. A method for receiving a backward optical signal, comprising:
performing focusing on the backward optical signal in different focal power in a first direction and a second direction.

17. The method according to claim 16, wherein the performing focusing on the backward optical signal in different focal power in a first direction and a second direction comprises:
performing beam reduction on the backward optical signal in the first direction; and
performing focusing on the backward optical signal obtained after the beam reduction.

18. The method according to claim 17, wherein before the performing focusing on the backward optical signal obtained after the beam reduction, the method further comprises:
skipping performing beam reduction on the backward optical signal in the second direction.

19. The method according to claim 16, wherein the performing focusing on the backward optical signal in different focal power in a first direction and a second direction comprises:
at a first location, processing the backward optical signal in the first direction, and skipping processing the backward optical signal in the second direction; and/or
skipping processing, at a second location, the backward optical signal in the first direction, and processing the backward optical signal in the second direction; and/or
performing, at a third location, first focusing on the backward optical signal in the first direction, and performing second focusing on the backward optical signal in the second direction, wherein focal power of the first focusing is different from focal power of the second focusing.

20. The method according to any one of claims 16 to 19, wherein the first direction is a meridian direction or a sagittal direction.

21. A method for receiving a backward optical signal, applied to the lidar according to any one of claims 1 to 15, wherein the lidar comprises a non-equal proportion focusing system, and the method comprises:
adjusting focal power of a first lens, wherein the first lens is any lens of one or more lens comprised in the non-equal proportion focusing system.

22. A vehicle, wherein the vehicle comprises the lidar according to any one of claims 1 to 15.
